# EUROPÄISCHE PATENTSCHRIFT

(11) **EP 1 986 824 B1**
(45) Veröffentlichungstag und Bekanntmachung des Hinweises auf die Patenterteilung: **18.11.2009**
(21) Anmeldenummer: 07703388.4
(22) Anmeldetag: 10.02.2007
(51) Int. Cl.: B25B 5/10, B25B 5/16, F16C 11/06

(54) **WERKSTÜCK-DRUCKBEAUFSCHLAGUNGSEINRICHTUNG UND SPANNWERKZEUG**
DEVICE FOR APPLYING PRESSURE TO A WORKPIECE, AND A CLAMPING TOOL
DISPOSITIF D'APPLICATION D'UNE PRESSION SUR UNE PIECE ET OUTIL DE SERRAGE

(30) Priorität: 21.02.2006 DE 102006008871
(43) Veröffentlichungstag der Anmeldung: 05.11.2008
(73) Patentinhaber: BESSEY Tool GmbH & Co. KG, 74321 Bietigheim-Bissingen (DE)
(72) Erfinder: KLÖPFER, Gerhard, 74385 Pleidelsheim (DE); PHILIPP, Karl, 74321 Bietigheim-Bissingen (DE); RÖSCH, Hans, 74376 Gemmrigheim (DE)
(74) Vertreter: Hoeger, Stellrecht & Partner Patentanwälte
(86) Internationale Anmeldenummer: PCT/EP2007/001149
(87) Internationale Veröffentlichungsnummer: WO 2007/096065

(56) Entgegenhaltungen:
- EP-A- 0 236 770
- DE-A1- 19 751 599
- DE-C- 929 357
- DE-U- 1 847 400
- DE-U- 7 402 870
- GB-A- 900 320
- GB-A- 2 268 971
- US-A- 2 729 126
- US-A- 2 845 828
- US-A- 3 052 462
- US-A- 3 151 897
- US-A- 4 802 700

## Beschreibung

Die Erfindung betrifft eine Werkstück-Druckbeaufschlagungseinrichtung für ein Spannwerkzeug gemäß dem Oberbegriff des Anspruchs 1. Eine solche Werkstück-Druckbeaufschlagungseinrichtung ist beispielweise aus GB 900 320 bekannt.

Die Erfindung betrifft ferner ein Spannwerkzeug mit einer Werkstück-Druckbeaufschlagungseinrichtung gemäß Anspruch 1.

Ein Beispiel eines Spannwerkzeugs mit einer Werkstück-Druckbeaufschlagungseinrichtung ist eine Schraubzwinge, bei der eine Spindel mit einer Werkstück-Druckbeaufschlagungseinrichtung auf ein Werkstück wirkt.

Aus der DE 18 47 400 U1 ist eine Klemmvorrichtung bekannt, welche ein druckausübendes Stück aufweist, die in einer Kugel endet. Ferner ist eine Druckplatte vorgesehen, welche auf der Kugel des druckausübenden Stücks abnehmbar befestigt ist. Eine Feder ist als Mittel zur abnehmbaren Befestigung der Druckplatte vorhanden.

Aus der DE-PS 929 357 ist eine Schraubzwinge mit an den beiden Druckplatten angeordneten, als Drehlager ausgebildeten Befestigungsvorrichtungen für austauschbare und drehbare, als Zulagen dienende Druckpolster bekannt.
Die Drehlager dieser Druckpolster sind als Druckknopflager ausgebildet.

Aus der DE 74 02 870 U1 ist ein Spannwerkzeug mit einer Gewindespindel und einer Druckkappe bekannt. Die Druckkappe umschließt mit einer Lagerpfanne einen Kopf der Gewindespindel formschlüssig. Ein Feder- oder Sprengring bildet den Rand der Lagerpfanne.

Aus der DE 197 51 599 A1 ist eine Schraubzwinge bekannt, welche eine Druckplatte aufweist, die schwenkbar auf einer Gewindespindel befestigt ist. Über eine Feststellvorrichtung lässt sich die Druckplatte geradrichten und eine Spindel an einer Oberseite eines Gleitbügels arretieren.

Aus der US 3,052,462 ist eine C-Zwinge mit einer Schraube bekannt, wobei die Schraube einen Kugelkopf trägt. An dem Kugelkopf sitzt ein Druckkopf. Dieser hat eine Bohrung und eine ringförmige Nut, mittels welcher eine Lippe definiert wird, die über einen Hals mit dem Restkörper des Druckkopfs verbunden ist.

Aus der GB 900 320 ist eine Zwinge zum Halten von Werkstücken bekannt mit einer Spindel, die zu und weg von den Werkstücken beweglich ist. Die Spindel weist einen Hals auf und einen gegenüber dem Hals vergrößerten Kopf, welcher integral am Hals sitzt. Ferner ist ein Druckstück vorgesehen, welches eine Werkstückbeaufschlagungsfläche und eine integrale Nabe hat, die eine Hohlkammer definiert. Eine Innenseite der Nabe hat eine nach innen geöffnete ringförmige Ausnehmung und schließt normalerweise den Kopf ein. Eine sprengringförmige Feder sitzt in der Ausnehmung in der Nabe und dient dazu, den Kopf zu beaufschlagen, um das Druckstück an dem Kopf zu halten. Die Nabe hat eine konische Seite, um bei Druckausübung auf die Feder die Feder zusammenzuziehen, um die Feder relativ zu der Ausnehmung zu montieren.

Der Erfindung liegt die Aufgabe zugrunde, eine Werkstück-Druckbeaufschlagungseinrichtung bereitzustellen, welche variabel einsetzbar ist.

Diese Aufgabe wird durch die Werkstück-Druckbeaufschlagungseinrichtung mit den Merkmalen gemäß Anspruch 1 gelöst.

Erfindungsgemäß wird eine Werkstück-Druckbeaufschlagungseinrichtung bereitgestellt, welche sich mit Kraftaufwand auf den Haltekopf aufsetzen lässt, wobei dieser Kraftaufwand geringer ist als der Kraftaufwand zum Abziehen der Werkstück-Druckbeaufschlagungseinrichtung.

Durch entsprechende Dimensionierung des Sperrelements und des Sperrelement-Aufnahmeraums lässt es sich dadurch erreichen, dass beispielsweise bei der Herstellung des Spannwerkzeugs die Werkstück-Druckbeaufschlagungseinrichtung sich auf einfache Weise fixieren lässt, wobei sie, da ein hoher Kraftaufwand zum Abnehmen erforderlich ist, sicher fixiert ist und damit gegen Verlust gesichert ist. Es lässt sich durch die erfindungsgemäße Lösung auch eine Werkstück-Druckbeaufschlagungseinrichtung bereitstellen, welche auf einfache Weise abnehmbar ist, wobei sie trotzdem sicher an dem Haltekopf fixiert werden kann. Abnehmbare Werkstück-Druckbeaufschlagungseinrichtungen sind beispielsweise sinnvoll, wenn ein Austausch einer Einrichtung, an welcher der Haltekopf sitzt, durchgeführt werden muss. Ein Beispiel für eine solche Einrichtung ist eine Spindel und insbesondere Schraubspindel einer Schraubzwinge.

Die Einstellung des unterschiedlichen Kraftaufwands zum Aufsetzen der Werkstück-Druckbeaufschlagungseinrichtung und zum Lösen der Werkstück-Druckbeaufschlagungseinrichtung ist bei der erfindungsgemäßen Lösung durch einfache Weise erreicht, indem das Sperrelement und der Sperrelement-Aufnahmeraum entsprechend angepasst ausgebildet werden.

Die erfindungsgemäße Lösung lässt sich an Spannwerkzeugen einsetzen, über die eine Druckbeaufschlagung von Werkstücken erfolgt. Beispielsweise ist ein Einsatz bei Handwerkzeugen vorgesehen, welche handgehalten und/oder handbetätigt sind. Die erfindungsgemäße Werkstück-Druckbeaufschlagungseinrichtung kann in Spannvorrichtungen eingesetzt werden, welche ein oder mehrere Spannwerkzeuge umfassen. Beispielsweise wird die erfindungsgemäße Werkstück-Druckbeaufschlagungseinrichtung an Schraubstöcken oder Kniehebelzwingen (toggle clamps) eingesetzt; solche Kniehebelzwingen können als Handwerkzeug ausgebildet sein und/oder in eine Spannvorrichtung integriert sein.

Der Anlagebereich der Werkstück-Druckbeaufschlagungseinrichtung kann eine ebene Anlagefläche aufweisen oder eine oder mehrere nichtebene Anlageflächen, welche an das spezielle Spannwerkzeug und/oder das zu beaufschlagende Werkstück angepasst sind. Beispielsweise kann der Anlagebereich eine prismatische Anlagefläche oder eine keilförmige Anlagefläche aufweisen. Der Anlagebereich kann gerundet sein mit einer konkaven oder einer konvexen Anlagefläche. Es sind auch Kombinationen von verschiedenen Anlageflächentypen möglich. Beispielsweise ist es auch möglich, dass der Anlagebereich mit einem oder mit mehreren spitzen Elementen versehen ist.

Insbesondere ist das mindestens eine Sperrelement verliersicher in dem Sperrelement-Aufnahmeraum angeordnet, um eine einfache Handhabbarkeit zu gewährleisten.

Günstig ist es, wenn das mindestens eine Sperrelement ringförmig ausgebildet ist. Durch ein solches ringförmiges Sperrelement lässt sich die Fixierung einer Werkstück-Druckbeaufschlagungseinrichtung an einem Haltekopf auf einfache Weise erreichen. Zum Durchtauchen eines Haltekopfs muss das ringförmige Sperrelement erweitert werden. Dazu ist ein entsprechender Kraftaufwand erforderlich.

Ganz besonders vorteilhaft ist es, wenn das mindestens eine Sperrelement ein offener Ring ist. Dadurch lässt sich dieses bei entsprechender Dimensionierung und bei entsprechendem Kraftaufwand aufweiten.

Ganz besonders vorteilhaft ist es, wenn das mindestens eine Sperrelement im nicht kraftbeaufschlagten Zustand einen Innendurchmesser (eine Innenfläche) aufweist, welcher kleiner ist als der größte Außendurchmesser des Haltekopfs. Nachdem der Haltekopf durch das Sperrelement durchgetaucht ist und keine Kraft mehr wirkt, wird er dann in seinem Haltekopf-Aufnahmeraum durch das Sperrelement gesichert.

Insbesondere ist das mindestens eine Sperrelement elastisch ausgebildet, so dass ein Innendurchmesser durch Kraftbeaufschlagung rückstellbar vergrößerbar ist. Dadurch lässt sich gewährleisten, dass der Haltekopf durch das Sperrelement hindurchgetaucht werden kann; um eine Fixierungsposition des Haltekopfs an der Werkstück-Druckbeaufschlagungseinrichtung zu erreichen.

Insbesondere ist das mindestens eine Sperrelement als Sprengring ausgebildet und entsprechend ist der Sperrelement-Aufnahmeraum als Sprengringnut ausgebildet.

Es kann vorgesehen sein, dass der Haltekopf-Aufnahmeraum zur Aufnahme eines Kugelkopfs als Haltekopf ausgebildet ist. Bei einem Kugelkopf als Haltekopf lässt sich eine optimierte Kraftverteilung beim Einführen des Haltekopfs bzw. Ausführen des Haltekopfs erreichen.

Es ist dann günstig, wenn der Haltekopf-Aufnahmeraum zu einer Längsachse rotationssymmetrisch ist. Es lassen sich hier symmetrische Kraftverhältnisse erreichen.

Günstig ist es, wenn eine Längsachse des Haltekopf-Aufnahmeraums im Wesentlichen senkrecht zu einer Anlagefläche des Anlagebereichs für das Werkstück orientiert ist. Dadurch lässt sich die Werkstück-Druckbeaufschlagungseinrichtung kompakt ausbilden.

Vorzugsweise liegt eine Einführrichtung und/oder Ausführrichtung des Haltekopfs in den/aus dem Haltekopf-Aufnahmeraum parallel oder in einem kleinen Winkel zu einer Längsachse des Haltekopf-Aufnahmeraums. Dadurch lässt sich für eine optimale Kraftwirkung zum Einführen/Ausführen sorgen, um die Werkstück-Druckbeaufschlagungseinrichtung auf einfache Weise an dem Haltekopf fixieren zu können und dabei eine sichere Fixierung zu erreichen.

Günstig ist es, wenn der Sperrelement-Aufnahmeraum an dem Haltekopf-Aufnahmeraum gebildet ist. Dadurch lässt es sich auf einfache Weise erreichen, dass der Haltekopf das Sperrelement beim Eindringen in den Haltekopf-Aufnahmeraum durchtauchen muss.

Aus dem gleichen Grund ist es günstig, wenn eine Mündungsöffnung des Haltekopf-Aufnahmeraums an dem Sperrelement-Aufnahmeraum gebildet ist.

Ganz besonders vorteilhaft ist es, wenn der Sperrelement-Aufnahmeraum so ausgebildet ist, dass das mindestens eine Sperrelement in ihm in einer Richtung parallel zu einer Längsrichtung des Haltekopf-Aufnahmeraums beweglich ist. Es lassen sich dadurch in dem Sperrelement-Aufnahmeraum unterschiedliche Positionen des Sperrelements bereitstellen, in welchen unterschiedliche Kräfte zu dessen Aufweitung zum Durchtauchen des Haltekopfs notwendig sind. Dadurch wiederum lässt es sich erreichen, dass für das Aufsetzen der Werkstück-Druckbeaufschlagungseinrichtung eine geringere Kraft erforderlich ist als für das Lösen.

Insbesondere weist der Sperrelement-Aufnahmeraum einen ersten Anlagebereich für das mindestens eine Sperrelement auf, welcher beim Einführen des Haltekopfs wirksam ist. Die Ausbildung des ersten Anlagebereichs bestimmt dann bei gegebenem Sperrelement, welcher Kraftaufwand zum Durchtauchen erforderlich ist.

Ferner weist der Sperrelement-Aufnahmeraum einen zweiten Anlagebereich für das mindestens eine Sperrelement auf, welcher beim Ausführen des Haltekopfs wirksam ist. Es lässt sich erreichen, dass der Haltekopf beim Ausführen das Sperrelement in den zweiten Anlagebereich führt und dort hält. Die zur Aufweitung zum Durchtauchen des Haltekopfs erforderlichen Kräfte werden bei gegebenem Sperrelement durch den zweiten Anlagebereich bestimmt.

Günstigerweise sind der erste Anlagebereich und der zweite Anlagebereich parallel zu einer Längsachse des Haltekopf-Aufnahmeraums beabstandet. Dadurch lässt sich je nach Bewegungsrichtung des Haltekopfs in dem Haltekopf-Aufnahmeraum das mindestens eine Sperrelement gegen den ersten Anlagebereich oder den zweiten Anlagebereich drücken. Durch entsprechende Ausbildung dieser Anlagebereiche wiederum lässt sich der unterschiedliche Kraftaufwand einstellen.

Insbesondere liegt der zweite Anlagebereich bezogen auf eine Einführrichtung des Haltekopfs in den Halte,kopf-Aufnahmeraum vor dem ersten Anlagebereich. Dadurch lässt es sich erreichen, dass zur Einführung des Haltekopfs das Sperrelement am ersten Anlagebereich an einer im Wesentlichen ebenen Anlagefläche anliegt, so dass der Kraftaufwand zur Aufweitung des Sperrelements minimiert ist.

Insbesondere ist der Kraftaufwand zur Öffnung des mindestens einen Sperrelements, wenn dieses am ersten Anlagebereich anliegt, kleiner als der Kraftaufwand, wenn dieses am zweiten Anlagebereich anliegt, wobei der Kraftaufwand auf eine Längsachse des Haltekopf-Aufnahmeraums bezogen ist. Dadurch lässt es sich auf einfache Weise erreichen, dass die Werkstück-Druckbeaufschlagungseinrichtung mit geringem Kraftaufwand an dem Haltekopf fixierbar ist und mit größerem Kraftaufwand von diesem gelöst werden muss.

Insbesondere ist am zweiten Anlagebereich eine Kraftumlenkung und/oder eine Kraftpufferung vorgesehen. Dadurch wird erreicht, dass im Vergleich zu dem ersten Anlagebereich, wenn eine gleiche axiale Kraft wirkt, eine geringere Kraft zur Öffnung des Sperrelements bereitsteht. Dies bedeutet, dass bei Anlage des zweiten Sperrelements am zweiten Anlagebereich eine größere axiale Kraft bereitgestellt werden muss, um für eine erforderliche Aufweitung des Sperrelements zu sorgen, wenn der Haltekopf hindurchgetaucht werden soll.

Günstig ist es, wenn der Haltekopf-Aufnahmeraum einen größeren Durchmesser am Bereich des Sperrelement-Aufnahmeraums aufweist. Dadurch lässt es sich erreichen, dass Seitenwände des Sperrelement-Aufnahmeraums die Aufweitung des Sperrelements beim Durchtauchen in Einführrichtung nicht wesentlich beeinflussen.

Aus dem gleichen Grund ist es günstig, wenn der Haltekopf-Aufnahmeraum seinen größten Durchmesser am ersten Anlagebereich aufweist.

Bei relativ geringem Kraftaufwand lässt sich ein Durchtauchen des Haltekopfs beim Einführen in den Haltekopf-Aufnahmeraum erreichen, wenn der Sperrelement-Aufnahmeraum und das Sperrelement so ausgebildet sind, dass das Sperrelement bei Anlage an dem ersten Anlagebereich eine Seitenwand des Sperrelement-Aufnahmeraums über einen Umfangsbereich nicht berührt, welcher mindestens 15 % des Gesamtumfangs der Seitenwand am ersten Anlagebereich beträgt. Dadurch lässt sich eine Aufweitung des Sperrelements erreichen, welche im Wesentlichen nur durch die elastische Verformbarkeit des Sperrelements bestimmt ist, so dass die Seitenwand diese Aufweitbarkeit nicht beeinflusst.

Günstigerweise weist der erste Anlagebereich eine Anlagefläche auf, welche im Wesentlichen senkrecht zur Längsachse des Haltekopf-Aufnahmeraums orientiert ist. Dadurch lässt sich eine Druckkraft, mittels welcher die Werkstück-Druckbeaufschlagungseinrichtung auf den Haltekopf aufgesetzt wird, optimiert in eine Aufweitung des Sperrelements umsetzen.

Bei einer vorteilhaften Ausführungsform weist der Sperrelement-Aufnahmeraum am zweiten Anlagebereich eine. Seitenwand auf, welche in einem spitzen Winkel zu der Längsachse des Haltekopf-Aufnahmeraums orientiert ist. Dadurch lässt sich auf einfache Weise für eine Kraftumlenkung sorgen, um am zweiten Anlagebereich eine verringerte Kraft bereitzustellen, welche wirksam ist für die Aufweitung des Sperrelements. Dies bedeutet wiederum, dass eine erhöhte Gesamtkraft bereitgestellt werden muss, um den Haltekopf aus dem Haltekopf-Aufnahmeraum herauszuführen. Dadurch wiederum wird die Werkstück-Druckbeaufschlagungseinrichtung auf sichere Weise an dem Haltekopf fixiert.

Insbesondere weist der zweite Anlagebereich eine Anlagefläche auf, welche in einem spitzen Winkel zu der Längsachse des Haltekopf-Aufnahmeraums orientiert ist. Dadurch lässt es sich auf einfache Weise erreichen, dass bei einer entsprechend wirkenden Zugkraft zur relativen Auseinanderbewegung der Werkstück-Druckbeaufschlagungseinrichtung und des Haltekopfs eine relativ geringe Kraft zur Aufweitung des Sperrelements bereitsteht.

Aus dem gleichen Grund ist es günstig, wenn der zweite Anlagebereich eine Anlagefläche aufweist, welche in einem spitzen Winkel zu einer Anlagefläche des ersten Anlagebereichs orientiert ist.

Insbesondere liegt der spitze Winkel im Bereich zwischen 30° und 70°.

Günstig ist es, wenn der zweite Anlagebereich so ausgebildet ist, dass beim Anliegen des mindestens einen Sperrelements an dem zweiten Anlagebereich der Haltekopf an dem mindestens einen Sperrelement anliegt und dessen Herausbewegung ohne zusätzlichen Kraftaufwand gesperrt ist.

Günstigerweise muss zum Durchtauchen des mindestens einen Sperrelements der Haltekopf bei Anlage des mindestens einen Sperrelements am ersten Anlagebereich oder zweiten Anlagebereich das mindestens eine Sperrelement aufweiten.

Günstig ist es, wenn eine Abnehmbarkeit von dem Haltekopf vorgesehen ist und insbesondere manuelle Abnehmbarkeit vorgesehen ist. Beispielsweise erfolgt die Dimensionierung derart, dass die Werkstück-Druckbeaufschlagungseinrichtung manuell abnehmbar ist, indem eine Schraubspindel gedreht wird und dabei die Werkstück-Druckbeaufschlagungseinrichtung an eine Gewindeführungseinrichtung der Schraubspindel anstößt.

Die Werkstück-Druckbeaufschlagungseinrichtung ist insbesondere als Druckkappe ausgebildet. Diese ist vorteilhafterweise einstückig mit dem Sperrelement. Diese Druckkappe lässt sich auf einfache Weise herstellen. Beispielsweise wird sie durch Umformungstechniken hergestellt.

Der Erfindung liegt ferner die Aufgabe zugrunde, ein Spannwerkzeug bereitzustellen, welches sich auf einfache Weise herstellen lässt bzw. welches variable Einsatzmöglichkeiten aufweist.

Diese Aufgabe wird erfindungsgemäß dadurch gelöst, dass das Spannwerkzeug mit mindestens einer erfindungsgemäßen Werkstück-Druckbeaufschlagungseinrichtung versehen ist.

Ein solches Spannwerkzeug lässt sich auf einfache Weise herstellen, da es auf einfache Weise mit einer Werkstück-Druckbeaufschlagungseinrichtung versehen werden kann. Diese ist auch bei entsprechendem Kraftaufwand abnehmbar, so dass beispielsweise eine Spindel auf einfache Weise austauschbar ist.

Insbesondere umfasst das erfindungsgemäße Spannwerkzeug eine Spindel, welche mit einem Haltekopf versehen ist. Über diese Spindel wird eine Druckkraft ausgeübt, wobei die Werkstück-Druckbeaufschlagungseinrichtung die Anlagefläche für das Werkstück bereitstellt.

Es kann vorgesehen sein, dass der Haltekopf als Kugelkopf ausgebildet ist. Ein solcher Kugelkopf lässt sich auf einfache Weise herstellen. Auch die Werkstück-Druckbeaufschlagungseinrichtung lässt sich dann auf einfache Weise herstellen.

Bei dem Spannwerkzeug handelt es sich beispielsweise um ein Handwerkzeug wie eine Zwinge (wie beispielsweise eine Schraubzwinge).

Die nachfolgende Beschreibung bevorzugter Ausführungsformen dient im Zusammenhang mit der Zeichnung der näheren Erläuterung der Erfindung. Es zeigen:
- Figur 1: eine perspektivische Darstellung eines Ausführungsbeispiels eines Spannwerkzeugs, welches mit einer Ausführungsform einer erfindungsgemäßen Werkstück-Druckbeaufschlagungseinrichtung versehen ist;
- Figur 2: eine seitliche Schnittdarstellung eines Ausführungsbeispiels einer erfindungsgemäßen Werkstück-Druckbeaufschlagungseinrichtung in einem Zwischenzustand beim Einschieben eines Haltekopfs;
- Figur 3: die Werkstück-Druckbeaufschlagungseinrichtung gemäß Figur 2 in einem Zwischenzustand beim Ausschieben des Haltekopfs; und
- Figur 4: eine Draufsicht auf die Werkstück-Druckbeaufschlagungseinrichtung gemäß Figur 2.

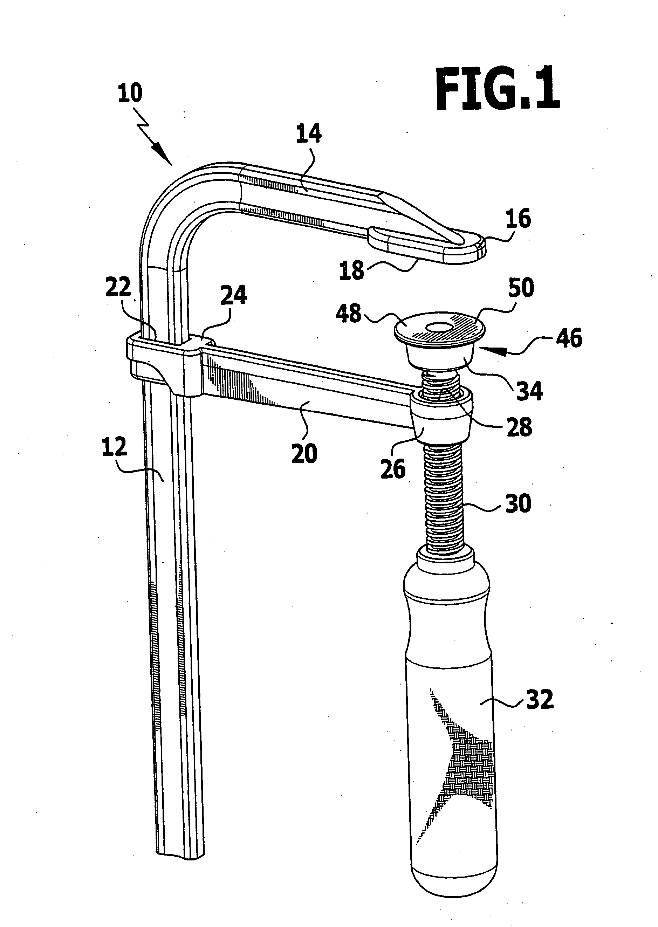

Ein Ausführungsbeispiel eines Spannwerkzeugs, welches in Figur 1 gezeigt und dort als Ganzes mit 10 bezeichnet, ist eine Schraubzwinge. Die Schraubzwinge 10 ist ein Handwerkzeug und umfasst eine Schiene 12, an welcher ein Festbügel 14 angeordnet ist. Der Festbügel 14 weist einen Anlagebereich 16 für ein Werkstück auf. Dieser Anlagebereich 16 umfasst eine im Wesentlichen ebene Anlagefläche 18.

An der Schiene 12 ist ein Gleitbügel 20 geführt. Der Gleitbügel 20 umfasst eine Ausnehmung 22, die an einem Halteelement 24 gebildet ist. Über das Halteelement 24 ist der Gleitbügel 20 an der Schiene 12 geführt. Das Halteelement 24 ist dabei so ausgebildet, dass es sich an der Schiene 12 verkanten kann.

Der Festbügel 14 und der Gleitbügel 20 sind mindestens nährungsweise parallel zueinander ausgerichtet.

Der Gleitbügel 20 umfasst an einem dem Halteelement 24 gegenüberliegenden Ende ein Gewindeelement 26 mit einem Innengewinde 28. In dem Innengewinde 28 ist eine Schraubspindel 30 geführt. An der Schraubspindel 30 sitzt ein Griffelement 32.

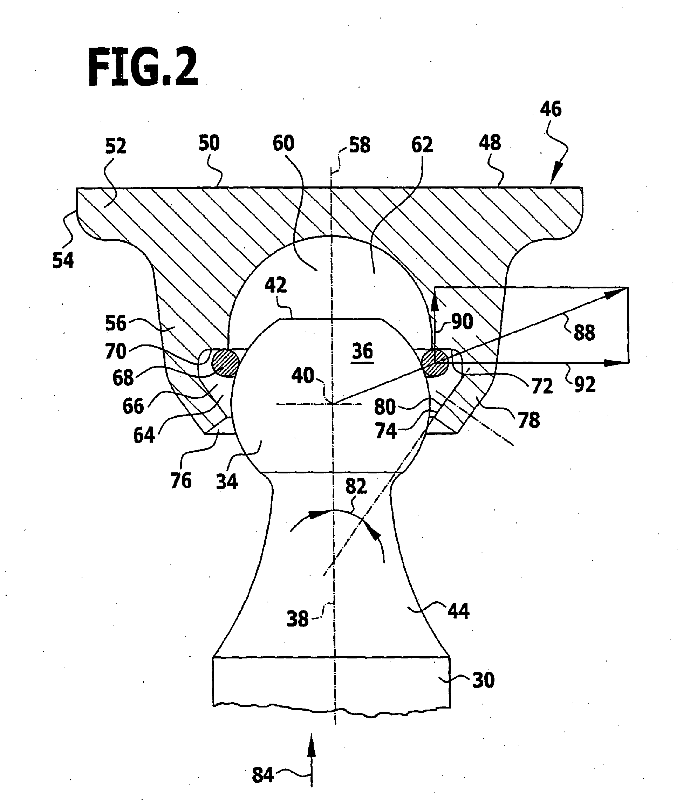

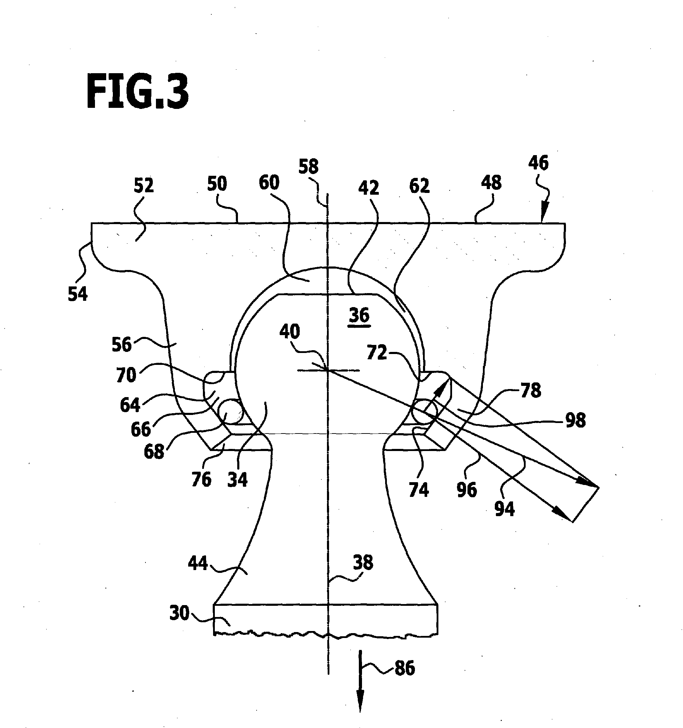

Die Schraubspindel 30 weist an einem dem Griffelement 32 gegenüberliegenden Ende einen Haltekopf 34 auf (Figuren 2 und 3), welcher insbesondere als Kugelkopf 36 ausgebildet ist. Die Schraubspindel 30 erstreckt sich längs einer Achse 38, welche koaxial zu einer Drehachse der Schraubspindel 30 ist. Ein Mittelpunkt 40 des Kugelkopfes 36 liegt auf der Achse 38.

Der Kugelkopf 36 weist bei dem gezeigten Ausführungsbeispiel eine im Wesentlichen ebene Stirnseite 42 auf, so dass er in diesem Bereich kugelabschnittsförmig ist.

Der Durchmesser des Kugelkopfes 36 ist kleiner als der Durchmesser der Schraubspindel 30 (jeweils bezogen auf eine Richtung senkrecht zur Achse 38). An einem Übergang 44 von dem Kugelkopf 36 zu der restlichen Schraubspindel 30 erweitert sich der Durchmesser.

An dem Haltekopf 34 ist eine insbesondere manuell abnehmbare Werkstück-Druckbeaufschlagungseinrichtung 46 angeordnet. Diese weist einen Anlagebereich 48 auf, welcher mit einer Anlagefläche 50 an ein Werkstück anlegbar ist. Die Anlagefläche 50 ist im Wesentlichen eben. Sie ist auf die Anlagefläche 18 des Festbügels 14 ausgerichtet.

Über die Schraubspindel 30 lässt sich eine Druckkraft auf ein Werkstück ausüben, welches mit einer Seite an dem Festbügel 14 anliegt.

Die Werkstück-Druckbeaufschlagungseinrichtung 46 ist abnehmbar, um beispielsweise auf einfache Weise einen Spindelaustausch durchführen zu können.

Die Werkstück-Druckbeaufschlagungseinrichtung 46 weist eine Stirnplatte 52 auf, an welcher der Anlagebereich 48 mit seiner Anlagefläche 50 gebildet ist. Die Stirnplatte 52 ist beispielsweise kreisscheibenförmig.

An der Stirnplatte 52 sitzt gegenüber einem äußeren Rand 54 der Stirnplatte 52 eingerückt ein Halteelement 56, über welches die Werkstück-Druckbeaufschlagungseinrichtung 46 an dem Haltekopf 34 gehalten ist. Die Stirnplatte 52 und das Halteelement 56 sind insbesondere einstückig.

Das Halteelement 56 und die Stirnplatte 52 sind insbesondere rotationssymmetrisch zu einer Längsachse 58 ausgebildet. In den Figuren 2 und 3 sind Stellungen gezeigt, bei welchen die Achse 38 der Schraubspindel 30 und die Längsachse 58 der Werkstück-Druckbeaufschlagungseinrichtung 46 koaxial zueinander ausgerichtet sind.

Das Halteelement 56 umfasst einen Haltekopf-Aufnahmeraum 60, in welchem der Haltekopf 34 positionierbar ist. Der Haltekopf-Aufnahmeraum 60 weist einen ersten Bereich 62 auf, welcher die Form eines Hohlkugelabschnitts hat. Beispielsweise hat er die Form eines Hohlhalbkugelabschnitts.

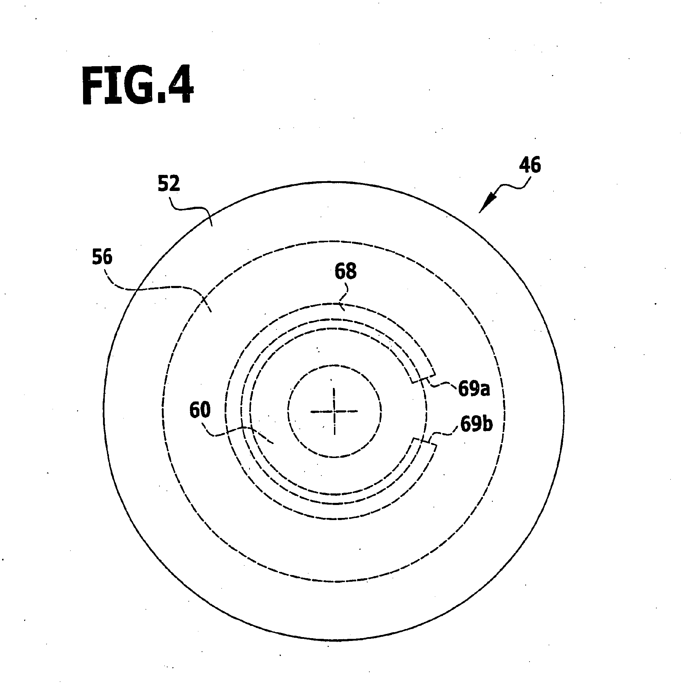

Auf den ersten Bereich 62 des Haltekopf-Aufnahmeraums 60 folgt ein zweiter Bereich 64, an welchem ein Sperrelement-Aufnahmeraum 66 gebildet ist. In dem Sperrelement-Aufnahmeraum 66 ist ein ringförmiges Sperrelement 68 positioniert (Figuren 2 bis 4).

Das Sperrelement 68 ist offen, d. h. es weist stirnseitige Enden 69a, 69b auf und es ist kein geschlossener Ring. Insbesondere ist das Sperrelement 68 als Sprengring ausgebildet. Entsprechend ist der Sperrelement-Aufnahmeraum 66 als Sprengringnut ausgebildet. Es ist aus einem elastischen Material hergestellt, so dass sein Innendurchmesser und dadurch seine Öffnungsweite durch Kraftbeaufschlagung rückstellbar vergrößerbar ist.

Der Sperrelement-Aufnahmeraum 66 weist einen ersten Anlagebereich 70 für das Sperrelement 68 auf. Dieser erste Anlagebereich 70 ist mit einer Anlagefläche im Wesentlichen senkrecht zu der Längsachse 58 orientiert (d. h. eine Flächennormale dieser Anlagefläche liegt parallel zur Längsachse 58). Der erste Anlagebereich 70 ist am Übergang von dem ersten Bereich 62 des Haltekopf-Aufnahmeraums zu dem zweiten Bereich 64 ausgebildet. Der HaltekopfAufnahmeraum 60 ist beispielsweise an dem ersten Anlagebereich 70 hohlzylindrisch ausgebildet, wobei der entsprechende Hohlzylinder einen Durchmesser senkrecht zur Längsachse 58 hat, welcher größer ist als der Durchmesser des ersten Bereichs 62 senkrecht zur Längsachse 58. Dadurch ist ein ringförmiger Absatz 72 bereitgestellt, um den ersten Anlagebereich 70 mit seiner Anlagefläche auszubilden.

Der Sperrelement-Aufnahmeraum 66 weist ferner einen zweiten Anlagebereich 74 auf, welcher beabstandet zu dem ersten Anlagebereich 70 ist. Der zweite Anlagebereich 74 ist an einem Bereich des Haltekopf-Aufnahmebereichs 60 gebildet, welcher beispielsweise eine hohlkegelabschnittförmige Gestalt hat mit einer (gedachten) Kegelspitze, welche auf der Längsachse 58 liegt.

Eine Mündungsöffnung 76 des Haltekopf-Aufnahmeraums 60 liegt dabei an diesem hohlkegelabschnittförmigen Bereich und damit am Sperrelement-Aufnahmeraum 66. Er ist durch eine Seitenwand 78 begrenzt, welche den zweiten Anlagebereich 74 ausbildet. Eine ringförmige Anlagefläche 80 des zweiten Anlagebereichs 74 ist dabei in einem spitzen Winkel 82 zu der Längsachse 58 orientiert. Dieser spitze Winkel, welcher dem Kegelwinkel des hohlkegelabschnittförmigen Bereichs des Haltekopf-Aufnahmeraums 60 entspricht, liegt beispielsweise in der Größenordnung zwischen 20° und 70°.

Das Sperrelement 68 ist an dem Sperrelement-Aufnahmeraum 66 über die Seitenwand 78 verliersicher gehalten. Durch den ersten Anlagebereich 70 ist seine Beweglichkeit in einer Einführrichtung 84 des Haltekopfs 34 in den Haltekopf-Aufnahmeraum 60 (Figur 2) gesperrt.

Damit der Haltekopf 34 vollständig in den Haltekopf-Aufnahmeraum 60 eintauchen kann, muss er das ringförmige Sperrelement 68 durchtauchen. Durch den Haltekopf 34 wird beim Einführen des Haltekopfs 34 in den Haltekopf-Aufnahmeraum 60 das Sperrelement 68 gegen den ersten Anlagebereich 70 gedrückt. Ohne Kraftausübung ist dabei ein Innendurchmesser des Sperrelements 68 kleiner als der größte Durchmesser (Kugeldurchmesser) des Haltekopfes 34. Damit der Haltekopf 34 das Sperrelement 68 durchtauchen kann, muss dessen Innendurchmesser unter entsprechendem Kraftaufwand vergrößert werden. Diese erfolgt durch elastische Aufbiegung des Sperrelements 68.

Beim Ausüben einer Kraft wird das Sperrelement 68 aufgedrückt, so dass der Haltekopf 34 durchgeschoben werden kann. In Figur 2 ist eine Stellung vor dem Aufdrücken des Sperrelements 68 gezeigt.

Der Sperrelement-Aufnahmeraum 66 ist dabei um den ersten Anlagebereich 70 so ausgebildet, dass eine Aufweitung des Sperrelements 68 in dem Umfange möglich ist, dass der Haltekopf 34 hindurchtauchen kann. Insbesondere ist das Sperrelement 68 so ausgebildet, dass mindestens 15 % des Gesamtumfangs einer Seitenwand am ersten Anlagebereich 70 durch das Sperrelement 68 nicht berührt werden; dadurch wird ausreichend Platz zu einer Öffnung des Sperrelements 68 bereitgestellt.

Wenn der Haltekopf 34 vollständig in den Haltekopf-Aufnahmeraum 60 getaucht ist, dann wird er durch das Sperrelement 68 gegenüber Abnahme gesichert. Nach Durchtauchen des Haltekopfs 34 stellt sich das Sperrelement 68 zurück in einen Sicherungszustand, in welchem das Durchtauchen verhindert ist und dadurch die Werkstück-Druckbeaufschlagungseinrichtung 46 an der Spindel 30 fixiert ist.

Das Sperrelement 68 ist parallel zur Längsachse 58 in dem Sperrelement-Aufnahmeraum 66 zwischen dem ersten Anlagebereich 70 und dem zweiten Anlagebereich 74 beweglich.

Zum Herausführen der Werkstück-Druckbeaufschlagungseinrichtung 46 muss der Haltekopf 34 in einer Ausführrichtung 86 aus dem Haltekopf-Aufnahmeraum 66 herausgeführt werden. Dies erfolgt beispielsweise derart, dass die Schraubspindel 30 zurückgedreht wird, bis die Werkstück-Druckbeaufschlagungseinrichtung 46 das Gewindeelement 26 berührt. Durch Weiterdrehen wird die notwendige Kraft aufgebracht, um den Haltekopf 34 herauszuführen.

Erfindungsgemäß ist es vorgesehen, dass die Kraft zum Einführen des Haltekopfs 34 in Einführrichtung 84 geringer ist, und zwar erheblich geringer ist, als die erforderliche Kraft zum Herausführen des Haltekopfs 34 in der Ausführrichtung 86. Zum Einführen des Haltekopfs 34 in den Haltekopf-Aufnahmeraum 60 muss die elastische Kraft zur Aufweitung des Sperrelements 68 überwunden werden. Dies wird dadurch erreicht, dass das Sperrelement 68 an dem ersten Anlagebereich 70 anliegt und dabei genügend Freiraum zwischen dem Sperrelement 68 und einer entsprechenden Seitenwand vorliegt, um eine Aufweitung zu ermöglichen.

In Figur 2 sind schematisch die Kräfte gezeigt, die auf das Sperrelement 68 wirken, wenn der Haltekopf 34 in der Einführrichtung 84 eingeschoben wird. Auf das Sperrelement 68 wirkt aufgrund der Kugelgestalt des Haltekopfs 34 eine bezogen auf den Kugelkopf 36 radial orientierte Radialkraft 88. Diese lässt sich in eine Normalkomponente 90 normal zur Anlagefläche des ersten Anlagebereichs 70 und in eine Querkomponente 92 zerlegen. Die Querkomponente 92 bewirkt eine Aufweitung des Sperrelements 68 zum Durchtauchen des Haltekopfs 34. Bei der Aufweitung des Sperrelements 68 ist eine Reibungskraft zu überwinden, die durch die Normalkomponente 90 bestimmt ist.

Bei der relativen Wegbewegung der Werkstück-Druckbeaufschlagungseinrichtung 46 und des Haltekopfs 34 nimmt diese das Sperrelement 68 mit, bis es an der Anlagefläche 80 des zweiten Anlagebereichs 74 anliegt.

Wenn das Sperrelement 68 an dem zweiten Anlagebereich 74 anliegt (Figur 3), dann wird beim Herausführen des Haltekopfs 34 in der Ausführrichtung 86 eine Radialkraft 94 auf das Sperrelement 68 ausgeübt. Diese Radialkraft 94 lässt sich in eine Normalkomponente 96 und eine Querkomponente 98 zerlegen. Durch die schräge Seitenwand 78 erfolgt eine Kraftumlenkung. Wenn diese genügend starr ausgebildet ist, dann ist eine Aufweitung des Sperrelements 68 parallel zur Normalkomponente 96 nicht möglich. Eine Aufweitung ist nur parallel zur Querkomponente 98 möglich. Die Querkomponente 98 ist im Vergleich zu der Querkomponente 92 relativ klein. Weiterhin ist die Normalkraftkomponente 96, die die Reibungskraft bei der Aufweitung bestimmt, relativ hoch. Dies bedeutet, dass eine hohe Radialkraft 94 und damit Zugkraft in der Richtung 86 aufgebracht werden muss, um das Sperrelement 68 so weit öffnen zu können, dass der Haltekopf 34 durch dieses hindurchführbar ist. Diese Zugkraft ist erheblich höher als die Druckkraft, die notwendig ist, um den Haltekopf 34 durch das Sperrelement 68 hindurch in der Einführrichtung 84 in den Haltekopf-Aufnahmeraum 60 zu pressen.

Dadurch ist ein erheblich höherer Kraftaufwand erforderlich, um den Haltekopf 34 in der Ausführrichtung 86 durch das Sperrelement 68 hindurchzuführen, während der Kraftaufwand geringer ist, wenn der Haltekopf 34 in der Einführrichtung 84 durch das Sperrelement 68 geführt wird.

Dies ermöglicht eine einfache Herstellbarkeit des Handwerkzeugs 10, da die Werkstück-Druckbeaufschlagungseinrichtung mit geringem Kraftaufwand auf die Schraubspindel 30 aufgesetzt werden kann. Zum Lösen ist jedoch ein höherer Kraftaufwand erforderlich.

Erfindungsgemäß wird ein Spannwerkzeug 10 (wie eine Handwerkzeug-Zwinge) mit einer abnehmbaren Werkstück-Druckbeaufschlagungseinrichtung 46 bereitgestellt. Die Werkstück-Druckbeaufschlagungseinrichtung 46 lässt sich bei entsprechendem Kraftaufwand von dem Haltekopf 34 lösen, wobei sie jedoch auf einfache Weise dem Haltekopf 34 fixierbar ist. Dadurch lässt sich die Werkstück-Druckbeaufschlagungseinrichtung 46 auf einfache Weise austauschen. Bei entsprechender Dimensionierung der Werkstück-Druckbeaufschlagungseinrichtung 46 lässt sie sich auch manuell abnehmen.

Die Werkstück-Druckbeaufschlagungseinrichtung 46 ist insbesondere als Druckkappe ausgebildet. Sie ist beispielsweise durch Umformung hergestellt. Die Seitenwand 78 lässt sich beispielsweise durch Kaltpressen herstellen.

Die Stirnplatte 52 und das Halteelement 56 sind insbesondere einstückig miteinander verbunden. Beispielsweise sind sie aus einem metallischen Material hergestellt. Das Sperrelement 68 ist ebenfalls vorzugsweise aus einem metallischen Material hergestellt. Es kann vorgesehen sein, dass an der Stirnplatte 52 eine Schutzkappe beispielsweise aus einem Kunststoffmaterial sitzt (in der Zeichnung nicht gezeigt).

Es ist grundsätzlich auch möglich, dass mehrere Sperrelemente in dem Sperrelement-Aufnahmeraum 66 positioniert sind.

Das Sperrelement 68 weist in dem Sperrelement-Aufnahmeraum 66 zwei ausgezeichnete Positionen auf, welche durch den ersten Anlagebereich 70 und den zweiten Anlagebereich 74 bestimmt sind. In diesen beiden Positionen wirken unterschiedliche, für die Aufweitung des Sperrelements 68 (zum Durchtauchen des Haltekopfs 34) relevante Kräfte. Dadurch wird erreicht, dass das Durchtauchen des Haltekopfs 34 in der Einführrichtung 84 einen (erheblich) kleineren Kraftaufwand erfordert als das Durchtauchen in der Ausführrichtung 86.

Bei dem oben beschriebenen Ausführungsbeispiel wird die unterschiedliche Kraftbeaufschlagung durch die schräge Seitenwand 78 verursacht, die eine Kraftumlenkung bewirkt.

Es ist alternativ oder zusätzlich möglich, dass an dem zweiten Anlagebereich ein Kraftpuffer wirkt, der dafür sorgt, dass nur ein Teil der wirkenden Gesamtkraft in die Aufweitung des Sperrelements 68 geht. Der übrige Teil der Kraft wird durch den Kraftpuffer aufgenommen. Dieser Kraftpuffer ist an dem ersten Anlagebereich nicht wirksam. Ein solcher Kraftpuffer lässt sich beispielsweise dadurch ausbilden, dass die Seitenwand im Bereich des ersten Anlagebereichs elastisch ausgebildet ist.

## Patentansprüche

1. Austauschbare Werkstück-Druckbeaufschlagungseinrichtung für ein Spannwerkzeug (10), umfassend einen Anlagebereich (48) für ein Werkstück, einen Haltekopf-Aufnahmeraum (60) für einen Haltekopf (34) des Spannwerkzeugs (10), wobei die Werkstück-Druckbeaufschlagungseinrichtung von dem Haltekopf (34) bei entsprechendem Kraftaufwand abnehmbar ist, und mindestens ein Sperrelement (68) zur Fixierung des Haltekopfs (34) in dem Haltekopf-Aufnahmeraum (60), welches in einem Sperrelement-Aufnahmeraum (66) angeordnet ist und welches von dem Haltekopf (34) durchtaucht werden muss, **dadurch gekennzeichnet, dass** das mindestens eine Sperrelement (68) und der Sperrelement-Aufnahmeraum (66) so ausgebildet sind, dass der Kraftaufwand zum Durchtauchen des mindestens einen Sperrelements (68) in einer Einführrichtung (84) des Haltekopfs (34) in den Haltekopf-Aufnahmeraum (60) kleiner ist als der Kraftaufwand zum Durchtauchen in einer Ausführrichtung (86) des Haltekopfs (34) aus dem Haltekopf-Aufnahmeraum (60), sodass ein unterschiedlicher Kraftaufwand zum Aufsetzen der Werkstück-Druckbeaufschlagungseinrichtung auf dem Haltekopf (34) und zum Lösen der Werkstück-Druckbeaufschlagungseinrichtung von dem Haltekopf (34) eingestellt ist.

2. Werkstück-Druckbeaufschlagungseinrichtung nach Anspruch 1, **dadurch gekennzeichnet, dass** das mindestens eine Sperrelement (68) im nicht kraftbeaufschlagten Zustand einen Innendurchmesser aufweist, welcher kleiner ist als der größte Außendurchmesser des Haltekopfs (34).

3. Werkstück-Druckbeaufschlagungseinrichtung nach Anspruch 1 oder 2, **dadurch gekennzeichnet, dass** das mindestens eine Sperrelement (68) elastisch ausgebildet ist, so dass sein Innendurchmesser durch Kraftbeaufschlagung rückstellbar vergrößerbar ist.

4. Werkstück-Druckbeaufschlagungseinrichtung nach einem der vorangehenden Ansprüche, **dadurch gekennzeichnet, dass** das mindestens eine Sperrelement (68) als Sprengring ausgebildet ist.

5. Werkstück-Druckbeaufschlagungseinrichtung nach einem der vorangehenden Ansprüche, **dadurch gekennzeichnet, dass** eine Einführrichtung (84) des Haltekopfs (34) in den Haltekopf-Aufnahmeraum (60) und/oder eine Ausführrichtung (86) des Haltekopfs (34) aus dem Haltekopf-Aufnahmeraum (60) parallel oder in einem kleinen Winkel zu einer Längsachse (58) des Haltekopf-Aufnahmeraums liegt.

6. Werkstück-Druckbeaufschlagungseinrichtung nach einem der vorangehenden Ansprüche, **dadurch gekennzeichnet, dass** der Sperrelement-Aufnahmeraum (66) so ausgebildet ist, dass das mindestens eine Sperrelement (68) in ihm in einer Richtung parallel zu einer Längsrichtung (58) des Haltekopf-Aufnahmeraums (60) beweglich ist.

7. Werkstück-Druckbeaufschlagungseinrichtung nach einem der vorangehenden Ansprüche, **dadurch gekennzeichnet, dass** der Sperrelement-Aufnahmeraum (66) einen ersten Anlagebereich (70) für das mindestens eine Sperrelement (68) aufweist, welcher beim Einführen des Haltekopfs (34) wirksam ist und dass der Sperrelement-Aufnahmeraum (66) einen zweiten Anlagebereich (74) für das mindestens eine Sperrelement (68) aufweist, welcher beim Ausführen des Haltekopfs (34) wirksam ist.

8. Werkstück-Druckbeaufschlagungseinrichtung nach Anspruch 7, **dadurch gekennzeichnet, dass** der erste Anlagebereich (70) und der zweite Anlagebereich (74) parallel zu einer Längsachse (58) des Haltekopf-Aufnahmeraums (60) beabstandet sind.

9. Werkstück-Druckbeaufschlagungseinrichtung nach Anspruch 7 oder 8, **dadurch gekennzeichnet, dass** der zweite Anlagebereich (74) bezogen auf eine Einführrichtung (84) des Haltekopfs (34) in den Haltekopf-Aufnahmeraum (60) vor dem ersten Anlagebereich (70) liegt.

10. Werkstück-Druckbeaufschlagungseinrichtung nach einem der Ansprüche 7 bis 9, **dadurch gekennzeichnet, dass** die erforderliche Kraft zur Öffnung des mindestens einen Sperrelements (68), wenn dieses am ersten Anlagebereich (70) anliegt, kleiner ist als die erforderliche Kraft zur Öffnung des mindestens einen Sperrelements (68), wenn dieses am zweiten Anlagebereich (74) anliegt, wobei der Kraftaufwand auf eine Längsachse (58) des Haltekopf-Aufnahmeraums (60) bezogen ist.

11. Werkstück-Druckbeaufschlagungseinrichtung nach Anspruch 10, **dadurch gekennzeichnet, dass** am zweiten Anlagebereich (74) eine Kraftumlenkung und/oder eine Kraftpufferung vorgesehen ist.

12. Werkstück-Druckbeaufschlagungseinrichtung nach einem der Ansprüche 7 bis 11, **dadurch gekennzeichnet, dass** der Sperrelement-Aufnahmeraum (66) und das Sperrelement (68) so ausgebildet sind, dass das Sperrelement (68) bei Anlage an dem ersten Anlagebereich (70) eine Seitenwand des Sperrelement-Aufnahmeraums (66) über einen Umfangsbereich nicht berührt, welcher mindestens 15 % des Gesamtumfangs der Seitenwand am ersten Anlagebereich (70) beträgt

13. Werkstück-Druckbeaufschlagungseinrichtung nach einem der Ansprüche 7 bis 12, **dadurch gekennzeichnet, dass** der Sperrelement-Aufnahmeraum (66) am zweiten Anlagebereich (74) eine Seitenwand (78) aufweist, welche in einem spitzen Winkel (82) zu einer Längsachse (58) des Haltekopf-Aufnahmeraums (60) orientiert ist und/oder dass der zweite Anlagebereich (74) eine Anlagefläche (80) aufweist, welche in einem spitzen Winkel (82) zu einer Längsachse (58) des Haltekopf-Aufnahmeraums (60) orientiert ist und/oder der zweite Anlagebereich (74) eine Anlagefläche (80) aufweist, welche in einem spitzen Winkel (82) zu einer Anlagefläche des ersten Anlagebereichs (70) orientiert ist.

14. Werkstück-Druckbeaufschlagungseinrichtung nach einem der Ansprüche 7 bis 13, **dadurch gekennzeichnet, dass** der zweite Anlagebereich (74) so ausgebildet ist, dass beim Anliegen des mindestens einen Sperrelements (68) an dem zweiten Anlagebereich (74) der Haltekopf (34) an dem mindestens einen Sperrelement (68) anliegt und die Herausbewegung ohne zusätzlichen Kraftaufwand gesperrt ist und dass zum Durchtauchen des mindestens einen Sperrelements (68) der Haltekopf (34) bei Anlage des mindestens einen Sperrelements (68) am ersten Anlagebereich (70) oder am zweiten Anlagebereich (74) das mindestens eine Sperrelement (68) aufweiten muss.

15. Spannwerkzeug, welches mit mindestens einer Werkstück-Druckbeaufschlagungseinrichtung gemäß einem der vorangehenden Ansprüche versehen ist.

## Claims

1. An interchangeable device for a clamping tool (10) for applying pressure to a workpiece comprising a contacting portion (48) for a workpiece, a retaining head locating space (60) for a retaining head (34) of the clamping tool (10), wherein the device for applying pressure to a workpiece can be detached from the retaining head by a corresponding amount of force, and at least one locking element (68) for fixing the retaining head (34) in the retaining head locating space (60), which said locking element is arranged in a locking element locating space (66) and must be passed through by the retaining head (34), **characterised in that** the at least one locking element (68) and the locking element locating space (66) are formed in such a manner that the amount of force required to pass through the at least one locking element (68) in the direction of insertion (84) of the retaining head (34) into the retaining head locating space (60) is smaller than the amount of force required to pass therethrough in the direction of extraction (86) of the retaining head (34) from the retaining head locating space (60), so that a differing amount of force is set for placing the device for applying pressure to a workpiece on the retaining head (34) and for releasing the device for applying pressure to a workpiece from the retaining head (34).

2. A device for applying pressure to a workpiece in accordance with claim 1, **characterized in that**, in the state wherein force is not applied thereto, the at least one locking element (68) has an internal diameter which is smaller than the largest external diameter of the retaining head (34).

3. A device for applying pressure to a workpiece in accordance with claim 1 or 2, **characterized in that** the at least one locking element (68) is formed in resilient manner so that its internal diameter is increasable in restorable manner by the application of force.

4. A device for applying pressure to a workpiece in accordance with any of the preceding Claims, **characterized in that** the at least one locking element (68) is in the form of a circlip.

5. A device for applying pressure to a workpiece in accordance with any of the preceding Claims, **characterized in that** the direction of insertion (84) of the retaining head (34) into the retaining head locating space (60)and/or a direction of extraction (86) of the retaining head (34) from the retaining head locating space (60) is parallel to or at a small angle to a longitudinal axis (58) of the retaining head locating space.

6. A device for applying pressure to a workpiece in accordance with any of the preceding Claims, **characterized in that** the locking element locating space (66) is formed in such a manner that the at least one locking element (68) is moveable therein in a direction parallel to a longitudinal direction (58) of the retaining head locating space (60).

7. A device for applying pressure to a workpiece in accordance with any of the preceding Claims, **characterized in that** the locking element locating space (66) has a first contacting portion (70) for the at least one locking element (68) which is effective during the insertion of the retaining head (34)and **in that** the locking element locating space (66) has a second contacting portion (74) for the at least one locking element (68) which is effective during the extraction of the retaining head (34).

8. A device for applying pressure to a workpiece in accordance with Claim 7, **characterized in that** the first contacting portion (70) and the second contacting portion (74) are spaced parallel to a longitudinal axis (58) of the retaining head locating space (60).

9. A device for applying pressure to a workpiece in accordance with Claim 7 or 8, **characterized in that** the second contacting portion (74) is located before the first contacting portion (70) taken with reference to the direction of insertion (84) of the retaining head (34) into the retaining head locating space (60).

10. A device for applying pressure to a workpiece in accordance with any of the Claims 7 to 9, **characterized in that** the force required for opening the at least one locking element (68) when the latter is in the first contacting portion (70) is smaller than the force required for opening the at least one locking element (68) when the latter is in the second contacting portion (74), wherein the amount of force is taken with reference to a longitudinal axis (58) of the retaining head locating space (60).

11. A device for applying pressure to a workpiece in accordance with Claim 10, **characterized in that** a force diverting means and/or a force buffering means is provided in the second contacting portion (74).

12. A device for applying pressure to a workpiece in accordance with any of the Claims 7 to 11, **characterized in that** the locking element locating space (66) and the locking element (68) are formed in such a manner that, when located in the first contacting portion (70), the locking element (68) does not touch a side wall of the locking element locating space (66) over a peripheral range which amounts to at least 15% of the total periphery of the side wall in the first contacting portion (70).

13. A device for applying pressure to a workpiece in accordance with any of the Claims 7 to 12, **characterized in that** the locking element locating space (66) has a side wall (78) in the second contacting portion (74) which is oriented at an acute angle (82) to the longitudinal axis (58) of the retaining head locating space (60) and/or **in that** the second contacting portion (74) has a contact surface (80) which is oriented at an acute angle (82) to a longitudinal axis (58) of the retaining head locating space (60), and/or the second contacting portion (74) has a contact surface (80) which is oriented at an acute angle (82) to a contact surface of the first contacting portion (70).

14. A device for applying pressure to a workpiece in accordance with any of the Claims 7 to 13, **characterized in that** the second contacting portion (74) is formed in such a manner that, when the at least one locking element (68) is located in the second contacting portion (74), the retaining head (34) rests against the at least one locking element (68) and outward movement thereof is blocked without an additional amount of force and for the purposes of passing through the at least one locking element (68), the retaining head (34) must expand the at least one locking element (68) when the at least one locking element (68) is located in the first contacting portion (70) or in the second contacting portion (74).

15. A clamping tool which is provided with at least one device for applying pressure to a workpiece in accordance with any of the preceding Claims.

## Revendications

1. Dispositif amovible de compression d'une pièce, destiné à un serre-joint (10), comportant une zone d'appui (48) pour une pièce, un logement (60) pour une tête de fixation (34) du serre-joint (10), ledit dispositif de compression d'une pièce pouvant être retiré de la tête de fixation (34) moyennant l'application d'une force correspondante, et au moins un élément de blocage (68), qui est destiné à immobiliser la tête de fixation (34) dans le logement (60) et qui est disposé dans un logement (66) et à travers lequel doit passer la tête de fixation (34), **caractérisé en ce que** ledit au moins un élément de blocage (68) et le logement (66) de celui-ci sont réalisés de telle sorte que la force à appliquer pour faire passer ledit au moins un élément de blocage (68) dans une direction d'introduction (84) de la tête de fixation (34) dans le logement (60), est plus faible que la force à appliquer pour le faire passer dans une direction d'extraction (86) de la tête de fixation (34) hors de son logement (60), de telle sorte qu'une application de force différente est réglée pour poser sur la tête de fixation (34) le dispositif de compression d'une pièce et pour désolidariser de la tête de fixation (34) le dispositif de compression d'une pièce.

2. Dispositif de compression d'une pièce selon la revendication 1, **caractérisé en ce que** ledit au moins un élément de blocage (68), à l'état non sollicité par une force, a un diamètre intérieur qui est inférieur au plus grand diamètre extérieur de la tête de fixation (34).

3. Dispositif de compression d'une pièce selon la revendication 1 ou 2, **caractérisé en ce que** ledit au moins un élément de blocage (68) est réalisé de manière élastique, de telle sorte que son diamètre intérieur peut être agrandi à nouveau par l'application d'une force.

4. Dispositif de compression d'une pièce selon l'une quelconque des revendications précédentes, **caractérisé en ce que** ledit au moins un élément de blocage (68) est réalisé sous forme de circlips.

5. Dispositif de compression d'une pièce selon l'une quelconque des revendications précédentes, **caractérisé en ce qu'**une direction d'introduction (84) de la tête de fixation (34) dans son logement (60) et/ou une direction d'extraction (86) de la tête de fixation (34) hors de son logement (60) sont parallèles à un axe longitudinal (58) du logement de la tête de fixation ou forment un petit angle avec ledit logement.

6. Dispositif de compression d'une pièce selon l'une quelconque des revendications précédentes, **caractérisé en ce que** le logement (66) de l'élément de blocage est réalisé de telle sorte que ledit au moins un élément de blocage (68) est mobile à l'intérieur de celui-ci dans une direction parallèle à une direction longitudinale (58) du logement (60) de la tête de fixation.

7. Dispositif de compression d'une pièce selon l'une quelconque des revendications précédentes, **caractérisé en ce que** le logement (66) de l'élément de blocage comporte une première zone d'appui (70) pour ledit au moins un élément de blocage (68), laquelle est active au moment de l'introduction de la tête de fixation (34), et **en ce que** le logement (66) de l'élément de blocage comporte une deuxième zone d'appui (74) pour ledit au moins un élément de blocage (68), laquelle est active lors de l'extraction de la tête de fixation (34).

8. Dispositif de compression d'une pièce selon la revendication 7, **caractérisé en ce que** la première zone d'appui (70) et la deuxième zone d'appui (74) sont disposées parallèlement et à distance d'un axe longitudinal (58) du logement (60) de la tête de fixation.

9. Dispositif de compression d'une pièce selon la revendication 7 ou 8, **caractérisé en ce que** la deuxième zone d'appui (74) est située en amont de la première zone d'appui (70) par référence à une direction d'introduction (84) de la tête de fixation (34) dans son logement (60).

10. Dispositif de compression d'une pièce selon l'une quelconque des revendications 7 à 9, **caractérisé en ce que** la force nécessaire pour ouvrir ledit au moins un élément de blocage (68), lorsque celui-ci est en appui sur la première zone d'appui (70), est inférieure à la force nécessaire pour ouvrir ledit au moins un élément de blocage (68), lorsque celui-ci est en appui sur la deuxième zone d'appui (74), l'application de la force se référant à un axe longitudinal (58) du logement (60) de la tête de fixation.

11. Dispositif de compression d'une pièce selon la revendication 10, **caractérisé en ce qu'**il est prévu une déviation de force et/ou une accumulation de force sur la deuxième zone d'appui (74).

12. Dispositif de compression d'une pièce selon l'une quelconque des revendications 7 à 11,
**caractérisé en ce que** le logement (66) de l'élément de blocage et l'élément de blocage (68) sont réalisés de telle sorte que l'élément de blocage (68), en cas d'appui contre la première zone d'appui (70), n'entre pas en contact avec une paroi latérale du logement (66) de l'élément de blocage sur partie de son pourtour, qui correspond au moins à 15 % du pourtour total de la paroi latérale au niveau de la première zone d'appui (70).

13. Dispositif de compression d'une pièce selon l'une quelconque des revendications 7 à 12, **caractérisé en ce que** le logement (66) de l'élément de blocage, au niveau de la deuxième zone d'appui (74), comporte une paroi latérale (78) qui est orientée en formant un angle aigu (82) avec un axe longitudinal (58) du logement (60) de la tête de fixation, et/ou **en ce que** la deuxième zone d'appui (74) comporte une surface d'appui (80) qui est orientée en formant un angle aigu (82) avec un axe longitudinal (58) du logement (60) de la tête de fixation, et/ou la deuxième zone d'appui (74) comporte une surface d'appui (80) qui est orientée en formant un angle aigu (82) avec une surface d'appui de la première zone d'appui (70).

14. Dispositif de compression d'une pièce selon l'une quelconque des revendications 7 à 13,
**caractérisé en ce que** la deuxième zone d'appui (74) est réalisée de telle sorte que, lorsque ledit au moins un élément de blocage (68) est en appui contre la deuxième zone d'appui (74), la tête de fixation (34) est en appui contre ledit au moins un élément de blocage (68) et le mouvement d'extraction est bloqué sans application d'une force supplémentaire, et **en ce que** pour le passage à travers ledit au moins un élément de blocage (68), lorsque ledit au moins un élément de blocage (68) est en appui contre la première zone d'appui (70) ou contre la deuxième zone d'appui (74), la tête de fixation (34) doit élargir ledit au moins un élément de blocage (68).

15. Serre-joint, qui est muni d'au moins un dispositif de compression d'une pièce selon l'une quelconque des revendications précédentes.
